# EUROPÄISCHE PATENTSCHRIFT

(11) **EP 2 468 462 B1**
(45) Veröffentlichungstag und Bekanntmachung des Hinweises auf die Patenterteilung: **21.12.2016**
(21) Anmeldenummer: 11190219.3
(22) Anmeldetag: 23.11.2011
(51) Int. Cl.: B25F 5/02, B23B 49/00

(54) **Hilfseinrichtung einer Bohrmaschine und Steuerungsverfahren**
Auxiliary device for a drilling machine and control procedure
Dispositif d'aide d'une perçeuse et procédé de commande

(30) Priorität: 23.12.2010 DE 102010064111
(43) Veröffentlichungstag der Anmeldung: 27.06.2012
(73) Patentinhaber: HILTI Aktiengesellschaft, 9494 Schaan (LI)
(72) Erfinder: Schmidt, Peer, DE-88131 lindau (DE); Schaer, Roland, 9472 Grabs (CH); Liniger, Andreas, CH-4900 Langenthal (CH); Leuzinger, David, CH-4900 Langenthal (CH)
(74) Vertreter: Hilti Aktiengesellschaft Corporate Intellectual Property

(56) Entgegenhaltungen:
- DE-A1-102010 003 489
- US-A1- 2009 165 313
- US-B1- 7 200 516

## Beschreibung

### GEBIET DER ERFINDUNG

Die vorliegende Erfindung betrifft eine Hilfseinrichtung gemäß dem Oberbegriff des Anspruchs 1 für eine Bohrmaschine zum, insbesondere senkrechten, Ausrichten der Bohrmaschine gegenüber einem Werkstück und ein zugehöriges Steuerungsverfahren gemäß dem Oberbegriff des Anspruchs 10. Eine solche Hilfseinrichtung und ein solches Steuerungsverfahren sind aus der US 7200516 B1 bekannt.

US 7200516 B1 beschreibt eine Hiffseinrichtung mit vier gleichgestalteten Leuchtdioden, die jeweils in einem Quadraten um die Werkzeugspindel angeordnet sind. Die Leuchtdioden werfen jeweils einen Lichtkreis auf das Werkstück. Der Anwender erkennt eine nicht senkrechte Orientierung der Werkzeugspindel zu dem Werkstück aufgrund der sich unterschiedlich groß ergebenden Lichtkreise. Ferner ist vorgeschlagen die Leuchtdioden zusätzlich mit Sensoren, z.B. einem Ultraschallsensor, zum Bestimmen einer Entfernung der Leuchtdiode von dem Werkstück zu versehen. Eine Recheneinheit ermittelt anhand der bestimmten Entfernungen die Orientierung der Werkzeugspindel.

DE 10 2010 003 489 A1 hat an einer Bohrmaschine mehrere Laserabstandsmesser. Aus den einzelnen Abstandsmessungen wird die Neigung ermittelt.

US 2009/0165313 A1 hat auf der Bohrmaschine einen Laser, der einen aufgefächerten Lichtstrahl durch eine zylindrische Linse auf das Werkstück wirft. Die Linse ist an einem Punkt ihrer Achse aufgehängt, um sich im Schwerefeld auszurichten. Eine Neigung der Bohrmaschine und damit des Lasers gegenüber der Horizontalen bewirkt einen nichtsenkrechten Einfall des aufgefächerten Lichtstrahls durch die Linse. Der aufgefächerte Lichtstrahl wird gekrümmt und zeichnet einen Bogen anstatt einer geraden Linie auf das Werkstück.

### OFFENBARUNG DER ERFINDUNG

Eine erfindungsgemäße Hilfseinrichtung gemäß dem Anspruch 1 ist mit einer Bohrmaschine verbunden oder kann an der Bohrmaschine lösbar befestigt werden. Die Hilfseinrichtung kann lösbare oder unlösbare Mittel zum Festlegen an der Bohrmaschine aufweisen, z.B. Schellen, Muffen, Klemmen, Schrauben. Ein Projektor ist vorgesehen einen ersten Lichtfleck und einen zweiten Lichtfleck auf ein zu bearbeitendes Werkstück zu projizieren. Der Projektor emittiert in Arbeitsrichtung auf das Werkstück bzw. eine zu bearbeitenden Fläche. Eine Kamera ist vorgesehen den ersten Lichtfleck und den zweiten Lichtfleck in einem Bild aufzuzeichnen. Eine Auswertungseinrichtung ist eingerichtet basierend auf einem ersten Abstand des in dem Bild aufgezeichneten ersten Lichtflecks zu einem Referenzpunkt und einen zweiten Abstand des in dem Bild aufgezeichneten zweiten Lichtflecks zu dem Referenzpunkt eine Neigung der Bohrmaschine zu dem Werkstück zu bestimmen. Eine Anzeigeneinrichtung ist mit der Auswertungseinrichtung gekoppelt und zeigt die bestimmte Neigung an. Die Lichtflecken können punktförmig oder flächig ausgebildet sein. Die Abstände werden zweckmäßigerweise von einer Mitte oder einem Schwerpunkt des Lichtflecks zu dem Referenzpunkt bestimmt. Falls die Lichtflecken charakteristische Ecken oder Spitzen aufweisen, kann der Abstand dieser zu dem Referenzpunkt herangezogen werden.

Ein erfindungsgemäßes Steuerungsverfahren gemäß dem Anspruch 10 für eine Hilfseinrichtung zum Ausrichten einer Bohrmaschine gegenüber einer Arbeitsfläche sieht folgende Schritten vor. Ein erster Lichtfleck und ein zweiter Lichtfleck werden mit einem Projektor auf die Arbeitsfläche projiziert. Eine Kamera zeichnet den ersten Lichtfleck und den zweiten Lichtfleck in einem Bild auf. Ein erster Abstand des in dem Bild aufgezeichneten ersten Lichtflecks zu einem Referenzpunkt und ein zweiter Abstand des in dem Bild aufgezeichneten zweiten Lichtflecks zu dem Referenzpunkt werden von einer Auswertungseinrichtung bestimmt. Der erste Abstand und der zweite Abstand sind virtuelle Abbilder der zugehörigen Abstände zwischen den Lichtflecken auf der Arbeitsfläche und einer fiktiven Achse, z.B. optischen Achse der Kamera. Eine Neigung der Bohrmaschine zu der Arbeitsfläche wird basierend auf dem ersten Abstand und dem zweiten Abstand ermittelt und mittels einer Anzeigeneinrichtung angezeigt.

Eine Ausgestaltung sieht vor, dass der Projektor einen ersten Lichtstrahl in eine erste Richtung zum Erzeugen des ersten Lichtflecks, einen zweiten Lichtstrahl in eine zweite Richtung zum Erzeugen des zweiten Lichtflecks und einen dritten Lichtstrahl zum Erzeugen eines dritten Lichtflecks ausgibt, wobei ein auf eine optische Achse der Kamera bezogener, Azimutwinkel des ersten Lichtstrahls und ein auf die optische Achse der Kamera bezogener Azimutwinkel des zweiten Lichtstrahls verschieden sind und ein auf die optische Achse bezogene Polarwinkel des ersten Lichtstrahls und ein auf die optische Achse bezogene Polarwinkel des dritten Lichtstrahls verschieden sind. Die Ausgabe von drei Lichtstrahlen in unterschiedlichen Orientierungen und Neigungen wird genutzt, um aus den in dem Bild aufgezeichneten Lichtpunkten eine Entfernung und eine Neigung der optischen Achse zu bestimmen. Die drei Lichtstrahlen erlauben Aufschluss über Neigung und Entfernung in absoluten Werten. Die bestimmten Werte können dem Anwender beispielsweise als Zahlen dargestellt werden.

Eine Ausgestaltung sieht vor, dass der erste Lichtstrahl unter einem Polarwinkel von größer 10 Grad bezogen auf die optische Achse geneigt ist und der dritte Lichtstrahl unter einem Polarwinkel von weniger als 5 Grad bezogen auf die optische Achse geneigt ist. Die Abbildung der Lichtpunkte in dem Bild geht mit einem Informationsverlust aufgrund einer Projektion einher. Die Anstellung der beiden Lichtstrahlen mit unterschiedlichem Polarwinkel zu der optischen Achse bzw. einer Bildebene des Bildes zeigt sich als ausreichend, die Informationen wieder bestimmen zu können.

Eine Ausgestaltung sieht vor, dass die Kamera und der Projektor auf einer Plattform angeordnet sind, die gegenüber einer Arbeitsachse der Bohrmaschine verschwenkbar ist. Insbesondere ist ein Polarwinkel zwischen der Arbeitsachse und einer optischen Achse der Kamera einstellbar. Die Hilfseinrichtung weist den Anwender ein, wie die optische Achse senkrecht zur Arbeitsfläche zu führen ist, wodurch der Bohrer entsprechend dem eingestellten Polarwinkel gehalten wird.

Eine Ausgestaltung sieht vor, dass die Anzeigeneinrichtung einen Projektor hat, der eine Anzeige auf das Werkstück projiziert. Der Projektor der Anzeigeneinrichtung ist in die gleiche Richtung wie die Kamera orientiert. Die Ausgabe von Licht zur Darstellung von Informationen durch den Projektor erfolgt in Arbeitsrichtung, d.h. in Richtung zu dem Werkzeug.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Bohrmaschine mit einer Hilfseinrichtung
- Fig. 2: ein Bild aufgenommen von der Hilfseinrichtung,
- Fig. 3: eine Detailansicht einer optischen Vermessungseinrichtung der Hilfseinrichtung;
- Fig. 4: eine Detailansicht einer optischen Vermessungseinrichtung der Hilfseinrichtung;
- Fig. 5: einen Monitor einer Anzeigeneinrichtung der Hilfseinrichtung;
- Fig. 6: einen Projektor einer Anzeigeneinrichtung der Hilfseinrichtung;

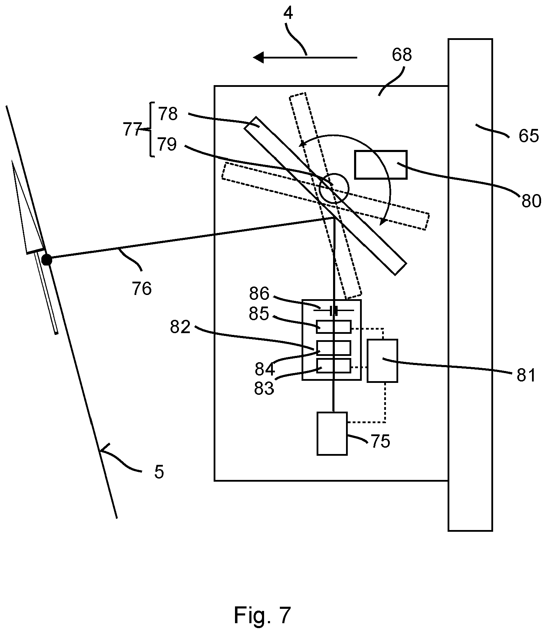

- Fig. 7: einen Projektor einer Anzeigeneinrichtung der Hilfseinrichtung.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

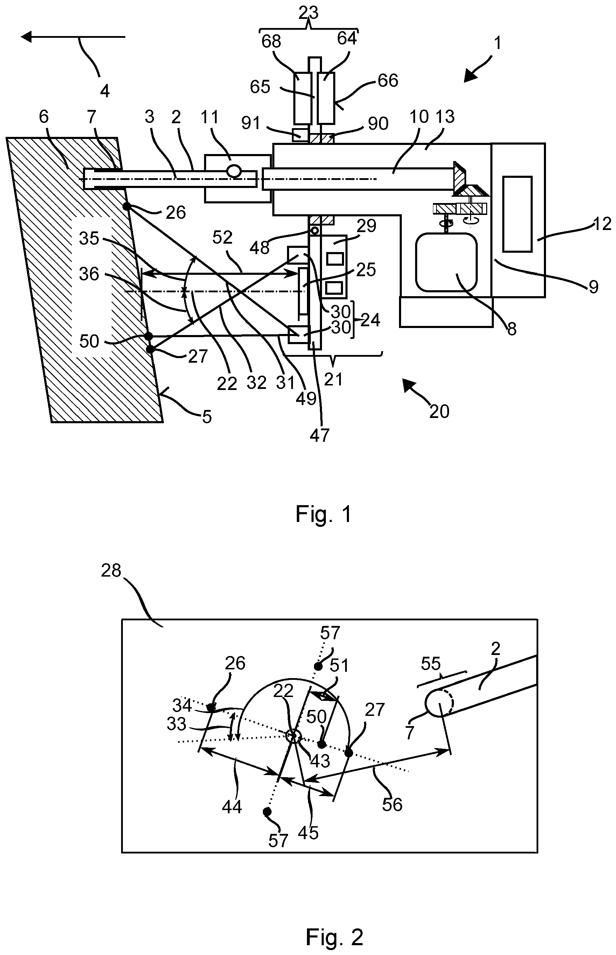

Fig. 1 zeigt eine beispielhafte Bohrmaschine 1, die einen Bohrer 2 um eine Arbeitsachse 3 drehend antreiben kann. Ein Anwender presst den Bohrer 2 in Arbeitsrichtung 4 an eine zu bearbeitende Arbeitsfläche 5 eines Werkstücks 6 an. Der drehende Bohrer 2 erzeugt dabei ein Bohrloch 7 in dem Werkstück 6. Der Bohrer 2 hat ein Schneidelement aus Hartmetall, z.B. gesintertes Wolframcarbid und/oder Diamant, das durch die Rotation um die Achse Material des Werkstücks 6 abträgt. Das Bohrgut kann durch einen wendelförmigen Schaft oder einen hohlen Schaft des Bohrers abtransportiert werden. Die Schneidelemente können auch entlang einer kreisförmigen Stirnfläche eines topfförmigen Bohrers angeordnet sein.

Ein Antrieb kann einen Motor **8,** z.B. einen Elektromotor, ein Getriebe **9** und eine Abtriebsspindel **10** enthalten. Die Abtriebsspindel **10** überträgt ein Drehmoment auf eine Werkzeugaufnahme **11,** in der Bohrer **2** einsetzbar ist. Ein Anwender kann die Bohrmaschine **1** mittels eines Handgriffs **12** halten und/oder führen, welcher vorzugsweise an einem der Werkzeugaufnahme **11** entfernten Ende eines Maschinengehäuses **13** angeordnet ist.

Eine Hilfseinrichtung **20** erleichtert dem Anwender die Arbeitsachse **3** der Bohrmaschine **1** in einem gewünschten Winkel, vorzugsweise senkrecht, zu der bearbeiteten Arbeitsfläche **5** auszurichten und ausgerichtet zu führen. Eine optische Vermessungseinrichtung **21** kann die Orientierung seiner optischen Achse **22** gegenüber dem Werkstück **6** ermitteln. Eine Anzeigeneinrichtung **23** visualisiert dem Anwender die aktuelle Orientierung. Zusätzlich kann die Hilfseinrichtung **20** eine aktuelle Bohrtiefe ermitteln und mittels der Anzeigeneinrichtung **23** visualisieren.

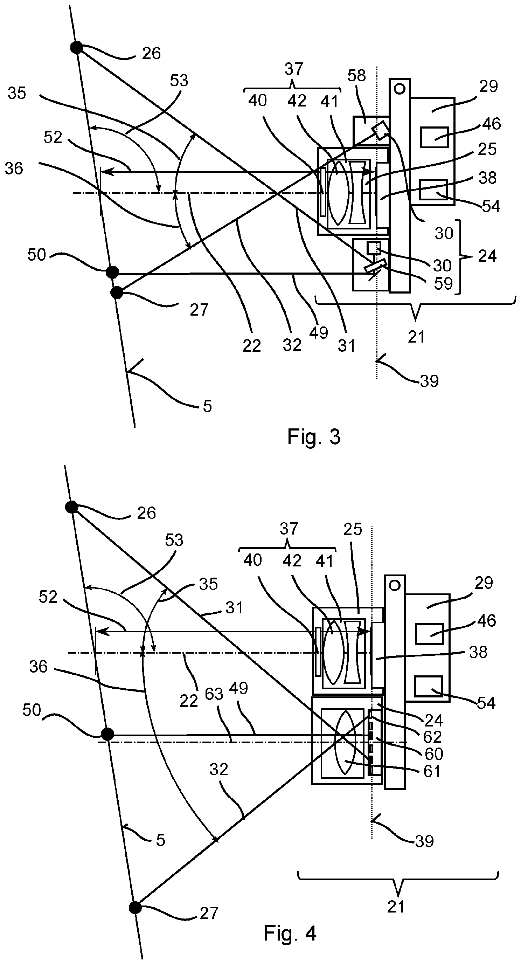

Die optische Vermessungseinrichtung **21** der Hilfseinrichtung **20** hat einen Projektor **24** und eine Kamera **25,** welche detaillierter in Fig. 3 dargestellt sind. Der Projektor **24** erzeugt auf der Arbeitsfläche **5** wenigstens einen ersten Lichtpunkt **26** und einen zweiten Lichtpunkt **27.** Die Kamera **25** ist vorzugsweise auf der optischen Achse **22** angeordnet und zeichnet die Arbeitsfläche **5** und die darauf erzeugten Lichtpunkte **26, 27** in einem Bild **28** auf (Fig. 2). Eine Auswertungseinrichtung **29** bestimmt anhand des Bildes **28** und der darin aufgezeichneten Lichtpunkte **26, 27** eine Orientierung der optischen Achse **22** gegenüber der Arbeitsfläche **5.**

Ein Beispiel für einen Projektor **24** sind zwei Laserlichtquellen **30,** z.B. Laserdioden, die einen ersten Lichtstrahl **31** und einen zweiten Lichtstrahl **32** erzeugen. Der erste Lichtstrahl **31** wird in eine erste Richtung und der zweite Lichtstrahl **32** in eine zweite Richtung, welche von der ersten Richtung verschieden ist, emittiert.

Die Richtung der Lichtstrahlen **31, 32** wird nachfolgend in Winkelkoordinaten bezüglich der optischen Achse **22** angegeben. Ein Polarwinkel beschreibt die Neigung eines Lichtstrahls gegenüber der optischen Achse **22**in einer Ebene, die von dem Lichtstrahl und der optischen Achse **22** aufgespannt ist. Ein Azimutwinkel gibt die Orientierung des Lichtstrahls in einer Drehrichtung um die optische Achse **22** an und kann in einer Projektion auf eine Ebene senkrecht zu der optischen Achse **22** bestimmt werden (vgl. Fig. 2).

Bevorzugt unterscheiden sich ein erster Azimutwinkel **33** des ersten Lichtstrahls **31** und ein zweiter Azimutwinkel **34** des zweiten Lichtstrahls **32.** Der erste Azimutwinkel **33** kann sich um 180 Grad von dem zweiten Azimutwinkel **34** unterscheiden, d.h. die beiden Lichtstrahlen **31, 32** liegen mit der optischen Achse **22** in einer Ebene. Ein erster Polarwinkel **35** des ersten Lichtstrahls **31** und ein zweiter Polarwinkel **36** des zweiten Lichtstrahls **32** können gleich sein. Die Polarwinkel **35, 36** liegen vorzugsweise in einem Bereich zwischen 10 Grad und 60 Grad. Der Projektor **24** kann die Lichtstrahlen **31, 32** die optische Achse **22** kreuzend emittieren.

Auf der Arbeitsfläche **5** führen der erste Lichtstrahl **31** zu dem ersten Lichtpunkt **26** und der zweite Lichtstrahl **32** zu dem zweiten Lichtpunkt **27.** Aus der relativen Lage des ersten und des zweiten Lichtpunkts zu der optischen Achse **22** und den Abständen kann die relative Orientierung der optischen Achse **22** zu dem Werkstück **6** bestimmt werden. Die von dem Projektor **24** ausgegebenen Lichtstrahlen **31, 32** können einen kreisförmigen Querschnitt oder von einer anderen Form sein. Lichtpunkte geringen Durchmessers sind aufgrund ihrer einfach bestimmbaren Lage bevorzugt, jedoch können auch anders geformte Lichtflecken, z.B. nicht kreisförmiger Gestalt, Pfeile, Kreuze, auf das Werkstück **6** projiziert werden.

Die Kamera **25** zeichnet die Arbeitsfläche **5** mit den Lichtpunkten **26, 27** auf dem Werkstück **6** auf. Die Kamera **25** kann eine Abbildungsoptik **37** beinhalten, welche die Arbeitsfläche **5** auf einen ortsauflösenden Photosensor **38** abbildet. Der Photosensor **38** wandelt das auf ihn einfallende Licht in ein Bild **28** um, welches in einer Bildebene **39** räumlich aufgelöst eine Intensität des Lichts angibt. Die Lichtpunkte **26, 27** sind zweckmäßigerweise derart hell, dass sie abgebildet in dem Bild **28** die höchste Intensität aufweisen. Ein Farbfilter **40** abgestimmt auf die Farbe der Lichtpunkte **26, 27** kann zu einer Verstärkung des Kontrastes vor dem Photosensor **38** angeordnet sein.

Die Abbildungsoptik **37** kann ein Objektiv **41** aus ein oder mehreren Linsen **42** enthalten. Die Linsen **42** sind vorzugsweise mittig und senkrecht zu der optischen Achse **22** angeordnet. Anstelle oder zusätzlich zu dem Objektiv **41** kann auch eine Blende vorgesehen sein. Der Projektor **24** und die Kamera **25** sind zueinander derart versetzt angeordnet, dass der erste Lichtpunkt **26** von der Kamera **25** unter einer von der erste Richtung verschiedenen Richtung und der zweite Lichtpunkt **27** unter einer von der zweiten Richtung verschiedenen Richtung erfasst werden.

Eine Auswertungseinrichtung **29** liest aus der Kamera **25,** insbesondere dem ortsauflösenden Photosensor **38** das Bild **28** aus. Die hellsten Punkte des Bildes werden als die virtuellen, abgebildeten Lichtpunkte **26, 27** interpretiert. Die Lage der abgebildeten Lichtpunkte **26, 27** zu einem Referenzpunkt **43** in dem Bild **28** oder in der Bildebene **39** wird von der Auswertungseinrichtung **29** ermittelt. In dem Bild **28** werden ein erster Abstand **44** des ersten Lichtpunkts **26** zu dem Referenzpunkt **43** und ein zweiter Abstand **45** des zweiten Lichtpunkts **27** zu dem Referenzpunkt **43.** Die ausgemessenen Abstände sind virtuell. Das Ausmessen kann ein Bestimmen der Koordinaten der Lichtpunkte **26, 27** in dem Bild beinhalten. Zum Ermitteln der Abstände **44, 45** sind beispielsweise zu den Koordinaten zugehörige Abstände in einer Nachschlagetabelle in einem Speicherbauelement **46,** z.B. RAM, Flash-RAM, der Auswertungseinrichtung **29** abgelegt. Der Referenzpunkt **43** kann beliebig festgelegt werden, bevorzugt ist der Referenzpunkt **43** der Schnittpunkt der Bildebene **39** mit der optischen Achse **22** oder eine Mitte des Bildes **28.**

Ein Betriebsmodus der Hilfseinrichtung **20** sieht vor, den Anwender in der senkrechten Ausrichtung der Bohrmaschine **1** gegenüber dem Werkstück **6** zu unterstützen. Die Hilfseinrichtung **20** ist derart an der Bohrmaschine **1** befestigt, dass die optische Achse **22** parallel zu der Arbeitsachse **3** ist. Die Auswertungseinrichtung **29** übermittelt ein Steuersignal, welches die optische Achse **22** gegenüber dem Werkstück **6** geneigt angibt, aus, wenn der erste Abstand **44** zu dem zweiten Abstand **45** verschieden ist. Das Steuersignal gibt an, in welcher Richtung der größere der Abstände **44, 45** liegt. Die Anzeigeneinrichtung **23** visualisiert das Steuersignal dem Anwender. Beispielsweise zeigt die Anzeigeneinrichtung **23** einen in die Richtung weisenden Pfeil an. Der Anwender wird hierdurch angewiesen den Handgriff **12** in die Richtung um das Bohrloch zu verschwenken, bis die Abstände **44, 45** gleich groß sind und die optische Achse **22** senkrecht zum Werkstück **6** ist.

Die optische Vermessungseinrichtung **21** kann auf einer gegenüber der Arbeitsachse **3** verschwenkbaren Plattform **47** angeordnet sein. Insbesondere ist ein Polarwinkel zwischen der optischen Achse **22** und der Arbeitsachse **3** einstellbar. Die Plattform kann beispielsweise mittels eines Kugelgelenks **48** oder Schwenkgelenks an dem Gehäuse der Bohrmaschine **1** befestigt sein. Ein Anwender stellt eine gewünschte, z.B. nicht-parallele Orientierung der optischen Achse **22** gegenüber der Arbeitsachse **3** ein. Die Auswertungseinrichtung **29** und die Anzeigeneinrichtung **23** weisen den Anwender an, die Bohrmaschine **1** mit der optischen Achse **22** senkrecht zum Werkstück **6** zu führen. Ein gebohrtes Bohrloch hat nachfolgend eine Neigung gegenüber der Arbeitsfläche **5,** welche der eingestellten Orientierung der Arbeitsachse **3** gegenüber der optischen Achse **22** entspricht.

In einem weiteren Betriebsmodus kann die Hilfseinrichtung **20** den Winkel der optischen Achse **22** zu der Arbeitsfläche **5** absolut bestimmen. Der Projektor **24** erzeugt einen dritten Lichtstrahl **49,** der vorzugsweise parallel zu der optischen Achse **22** und versetzt zu der optischen Achse **22** ist. Anstelle parallel, kann der dritte Lichtstrahl **49** auch einen verglichen zu dem ersten Lichtstrahl **31** geringen Polarwinkel gegenüber der optischen Achse **22** aufweisen, z.B. zwischen 0 Grad und 5 Grad. Ein sich ergebender dritter Lichtpunkt **50** wird von der Kamera **25** erfasst. Ein virtueller, dritter Abstand **51** des abgebildeten Lichtpunkts **50** von dem Referenzpunkt **43** wird in dem Bild **28** ermittelt. Anhand des dritten Abstandes **51** wird eine Entfernung **52** der Kamera **25** von dem Werkstück **6** bestimmt. Der dritte Abstand **51** wächst in dem Bild **28** mit abnehmender Entfernung **52.** Basierend auf der Entfernung **52,** dem ersten Abstand **44** und dem zweiten Abstand **45** und der Polarwinkel **35** des ersten Lichtstrahls **31** und dem Polarwinkel **36** des zweiten Lichtstrahls **32** kann die Neigung **53** der optischen Achse **22** gegenüber der Arbeitsfläche **5** absolut und quantifiziert ermittelt werden. Vorzugsweise sind in dem Speicherbauelement **46** zu verschiedenen Entfernungen **52,** ersten und zweiten Abständen entsprechende Polarwinkel **35** hinterlegt. Die Anzeigeneinrichtung **23** zeigt die den absoluten Winkel vorzugsweise als Zahlen an.

Eine weitere Ausgestaltung sieht vor, dass der erste Lichtstrahl **31** und zweiten Lichtstrahl **32** einen unterschiedlichen Polarwinkel **35, 36** zu der optischen Achse **22** aufweisen. Die beiden Lichtstrahlen **31, 32** können innerhalb einer Ebene verlaufen, welche beispielsweise die optische Achse **22** einschließt. Vorzugsweise ist der erste Lichtstrahl **31** parallel zu der optischen Achse **22,** der zweite Lichtstrahl geneigt zu der optischen Achse **22.** Mittels der optischen Achse **22** als Referenzpunkt **43** können aus dem ersten Abstand **44** und dem zweiten Abstand **45** unmittelbar die absolute Neigung **53** der optischen Achse **22** zu der Arbeitsfläche **5** bestimmt werden.

Der Photosensor **38** kann eine Mehrzahl photosensitiver Zellen aufweisen, welche auf einem Raster angeordnet sind. Koordinaten eines Lichtpunkts entsprechen der Zeile und ggf. Spalte der jeweils von dem Lichtpunkt **26, 27** beleuchteten Zelle. Eine Zelle kann als Referenzpunkt **43** festgelegt sein. Der Photosensor **38** kann beispielsweise einen CCD-Chip oder einen APS-Sensor enthalten.

Die Kamera **25** kann in dem Bild **28** das Bohrloch **7** in der Arbeitsfläche **5** und den Bohrer **2** aufzeichnen. Die Auswertungseinrichtung **29** enthält eine Bilderkennung **54,** die das Bohrloch **7** identifiziert und dessen Koordinaten in dem Bild **28** bestimmt. Die Bilderkennung **54** kann beispielsweise zunächst den Bohrer **2** identifizieren, z.B. anhand seiner länglichen Form und/oder basierend auf einer bekannten Orientierung des Bohrers **2** im Bild **28,** welche sich wegen einer festen oder bekannten Anordnung der Kamera **25** relativ zu dem Bohrer **2** ergibt. Die Koordinaten eines Endes **55** des sichtbaren Teils des Bohrers **2** entsprechen den Koordinaten des Bohrlochs **7.** In dem Bild **28** wird ein Abstand **56** des Bohrlochs **7** von dem Referenzpunkt **43** bestimmt. Der Abstand **56** ist ein Maß für die Entfernung **52** der Kamera **25** von dem Bohrloch **7** und damit der Arbeitsfläche **5.** Die Auswertungseinrichtung **29** kann eine Entfernung der Bohrmaschine **1** basierend auf dem Maß bestimmen und an die Anzeigeneinrichtung **23** zur Visualisierung übermitteln. Die Entfernung **52** kann auch zur Bestimmung der absoluten Winkel **53** herangezogen werden.

Die bisher beschriebenen Ausführungsformen können eine Neigung in Abweichung gegenüber einem Lot oder als absoluten Winkel **53** der optischen Achse **22** gegenüber dem Werkstück **6** in einer ersten Ebene ermitteln. Eine Weiterbildung sieht weitere Lichtstrahlen vor, die um 90 Grad verschiedene Azimutwinkel zu dem ersten und zweiten Lichtstrahl **31, 32** aufweisen. Die Auswertung der Lichtpunkte **57** der weiteren Lichtstrahlen kann analog dem ersten und zweiten Lichtstrahl **31, 32** erfolgen. Hierdurch wird die Neigung in einer zweiten zur ersten senkrechten Ebene ermittelt. Für die Bestimmung der absoluten Winkel **53** kann zusätzlich der dritte Lichtstrahl **49** herangezogen werden, welcher gegenüber der optischen Achse **22** einen zu den anderen Lichtstrahlen **31, 32** unterschiedlichen Polarwinkel hat. In einer Ausführungsform sind drei Lichtstrahlen verschiedener Orientierung vorgesehen, von denen sich zwei wenigstens im Azimutwinkel unterscheiden und zwei sich wenigstens im Polarwinkel unterscheiden. Zusätzlich oder anstelle des dritten Lichtstrahls **49** kann ein Ausmessen des Abstandes **56** des Bohrlochs **7** von der optischen Achse **22** in dem Bild **28** zur Entfernungsbestimmung verwendet werden.

Der Projektor **24** kann aus mehreren einzelnen, unabhängigen Laserlichtquellen **30** zusammengesetzt sein. Die Laserdioden **30** können entsprechend den vorgegebenen Richtungen der Laserstrahlen **32** ausgerichtet in einem Gehäuse **58** angeordnet sein. Der Projektor **24** kann auch einen Strahlteiler **59** aufweisen, um einen Lichtstrahl in zwei Lichtstrahlen **31, 49** aufzuspalten. Der Strahlteiler **59** kann beispielsweise ein Glasplättchen oder ein Bündel von Glasfasern enthalten.

In einer anderen Ausgestaltung hat der Projektor **24** alternativ oder zusätzlich einen selbstleuchtenden Bildschirm **60** und eine Abbildungsoptik **61** (Fig. 4). Der Bildschirm **60** kann beispielsweise eine hintergrundbeleuchtete Flüssigkristallanzeige, eine Matrix aus Leuchtdioden etc. sein. Auf dem Bildschirm **60** können aus mehreren Bildpunkten **62** zusammengesetzte Symbole dargestellt werden. Die Abbildungsoptik **61** bildet das auf dem Bildschirm **60** dargestellte Bild auf die Arbeitsfläche **5** ab. Die Abbildungsoptik **61** kann ein oder mehrere Linsen aufweisen, die entlang einer optischen Achse **63** der Abbildungsoptik **61** angeordnet sind. Die optische Achse **63** verläuft durch den Bildschirm **60,** vorzugsweise durch die Mitte des Bildschirms **60.** Bildpunkte nahe der optischen Achse **63** führen zu weitgehend zu der optischen Achse **22** parallele Lichtstrahlen, während Bildpunkte nahe dem Bildschirmrand durch zu der optischen Achse **63** geneigte Lichtstrahlen **31, 32** auf die Arbeitsfläche **5** projiziert werden. Die Neigung der Lichtstrahlen kann durch die Brennweite der Abbildungsoptik **61** eingestellt werden.

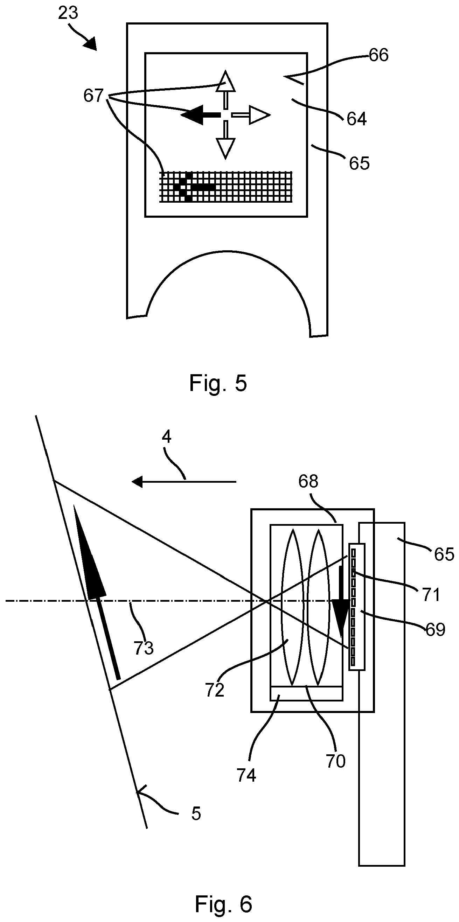

Die Anzeigeneinrichtung **23** hat einen Monitor **64** der an einem Träger **65** der Hilfseinrichtung **20** befestigt ist. Der Monitor **64** ist mit seiner ablesbaren Fläche **66** dem Anwender zugewandt, d.h. entgegen der Arbeitsrichtung **4** orientiert. Der Anwender kann beim Führen der Bohrmaschine **1** in Arbeitsrichtung **4** Informationen auf dem Monitor **64** ablesen. Mehrere elektrooptische Segmente **67** sind voneinander unabhängig zwischen einem hellen und einem dunklen Zustand umschaltbar (Fig. 5). Die Segmente **67** können selbstleuchtend, z.B. eine Zeile oder eine Matrix aus Leuchtdioden, oder eine Hintergrundbeleuchtung abschattend, z.B. mehrere Flüssigkristallzellen, sein. Die Segmente **67** können in der Form von Pfeilen ausgebildet sein, die in 90 Grad Schritten gedreht angeordnet sind. Bei einer Neigung der optischen Achse **22** gegenüber der Arbeitsfläche **5** wird jeweils eines der Segmente **67** entsprechend dem Steuersignal der Auswertungseinrichtung **29** aktiviert. Die Segmente **67** können auch als eine Vielzahl von Bildpunkten auf einem Raster ausgebildet sein, die zusammen aktiviert Pfeile, Ziffern, Buchstaben etc. darstellen. Das Beispiel von Fig. 5 zeigt eine Gruppe von dunkel geschalteten Segmenten **67,** welche eine Neigung nach rechts angeben und den Anwender deshalb auffordern die Bohrmaschine **1** nach links zu verschwenken. Die Segmente **67** sind auf einer dem Werkzeug **2** abgewandten Fläche des Hilfseinrichtung **20** angeordnet. Der Anwender kann die dargestellten Richtungen unmittelbar auf der Hilfseinrichtung **20** ablesen.

Die Anzeigeneinrichtung **22** hat beispielsweise einen Projektor **68,** der eine durch die Anzeigeneinrichtung **22** darzustellende Information auf die Arbeitsfläche **5** projiziert (Fig. 6). Der Projektor **68** weist in Arbeitsrichtung **4.** Der Projektor **68** kann einen selbstleuchtenden Bildschirm **69** und eine Abbildungsoptik **70** aufweisen.

Der Bildschirm **69** setzt sich aus mehreren individuell ansteuerbaren elektrooptischen Leuchtelementen **71** zusammen. Jedes der elektrooptischen Elemente **71** kann in einem Schaltzustand Licht emittieren und in einem anderen Schaltzustand kein Licht emittieren. Die elektrooptischen Elemente **71** können beispielsweise hintergrundbeleuchtete Flüssigkristallanzeigen, punktförmige oder anders geometrisch gestalteten Leuchtdioden, ein von einer Lampe beleuchtetes Feld von Mikrospiegeln etc. enthalten. Beispielhaft ist der Bildschirm **69** mit mehreren elektrooptischen Elementen **71,** die auf einem Raster angeordnet sind, dargestellt. Die Bildpunkte können einzeln oder in Gruppen leuchten, um ein oder mehrere gewünschte Symbole darzustellen. Die Symbole sind Pfeile, Ziffern, Buchstaben etc. Die Vermessungseinrichtung **21** steuert den Projektor **68** an. Dabei werden je nach von der Vermessungseinrichtung **21** übermittelter Daten unterschiedliche Gruppen der elektrooptischen Elemente **71** leuchtend geschaltet. Die Gruppen unterscheiden sich paarweise wenigstens in einem Element **71,** das für die eine Gruppe leuchtenden und die andere Gruppe nicht-leuchtend geschaltet ist.

Die Abbildungsoptik **70** bildet die auf dem Bildschirm **69** dargestellten Symbole auf die Arbeitsfläche **5** ab. Die Abbildungsoptik **70** hat ein Objektiv **72** aus ein oder mehreren Linsen. Eine Brennweite und ein Fokuspunkt des Objektivs **72** kann einstellbar sein. Beispielsweise kann das Objektiv **72** längs seiner optischen Achse **73** durch einen Schlitten **74** bewegt werden. Alternativ kann das Objektiv **72** eine flüssige Linse enthalten, deren Brennweite durch Anlegen eines elektrischen Feldes einstellbar ist.

Eine andere Ausgestaltung des Projektors **68** hat eine Lichtquelle **75** zum Erzeugen eines Lichtstrahls **76,** vorzugsweise einen Laser, und eine Ablenkeinrichtung **77.** Die Ablenkeinrichtung **77** hat beispielsweise einen Spiegel **78,** der um zwei Achsen **79** drehbar oder schwingbar aufgehängt ist. Der Spiegel **78** kann durch einen Erreger **80,** z.B. piezoelektrisch, magnetisch oder elektrostatisch, zu einer Schwingung um die beiden Achsen **79** angeregt sein. Der Spiegel **78** kann auch um eine oder beide Achsen **79** rotieren. Für eine Ablenkung des Lichtstrahls **76** in zwei Richtungen können auch zwei schwingende oder rotierende Spiegel vorgesehen sein. Der Lichtstrahl **76** wird entlang eines Rasters z.B. einer Lissajous-Figur über die Arbeitsfläche **5** abgelenkt.

Eine Ansteuerungseinrichtung **81** schaltet eine Intensität des Lichtstrahls **76** in Abhängigkeit der Stellung der Ablenkeinrichtung **77,** um Symbole auf die Arbeitsfläche **5** zu projizieren. Ein Schaltmuster kann für verschiedene benötigte Symbole, z.B. Pfeile, Ziffern, in einem Speicherbauelement der Ansteuereinrichtung **81** hinterlegt sein. Die Schaltmuster legen die Intensität bezogen auf eine Winkelstellung des Spiegels **78** fest. Die Intensität des Lichtstrahls **76** wird reduziert, sobald sich der Lichtstrahl **76** außerhalb von Bereichen des Symbols befindet. Das Schalten der Intensität kann durch Schalten einer Stromzufuhr für die Lichtquelle **75** mittels der Ansteuerungseinrichtung **81** erfolgen. Ferner kann das Schalten durch einen Intensitätsmodulator **82** erfolgen, welcher z.B. eine Kombination einer Pockelszelle **83** zum Ändern einer Polarisation und einen nachgeschalteten Polarisationsfilter **84** und/oder eine Kombination aus einem akkustooptischen Modulator **85** zum Ändern einer Ausbreitungsrichtung des Lichtstrahls und einer nachgeschalteten Blende **86** enthält.

Eine Ausgestaltung sieht vor den Projektor **68** der Anzeigeneinrichtung **23** für die Darstellung von Messergebnissen auch zur Generierung der Lichtflecken **26, 27** auf der Arbeitsfläche **5** zum Ausmessen durch die Vermessungseinrichtung **21** zu verwenden. Ein zusätzlicher Projektor **24** der Vermessungseinrichtung **21** kann entfallen.

Die Hilfseinrichtung **20** kann ein Spannband **90** aufweisen, das um einen Hals **91** oder einen Griff der Bohrmaschine **1** gelegt werden kann. Ein Spannmechanismus **91** klemmt das Spannband an der Bohrmaschine **1** fest. Anstelle eines Spannbandes können auch Schellen durch den Spannmechanismus **91** an der Bohrmaschine **1** angeklemmt werden.

## Patentansprüche

1. Hilfseinrichtung (20), die mit einer Bohrmaschine (1) verbindbar ist, mit einem Projektor (24), der einen ersten Lichtfleck (26) und einen zweiten Lichtfleck (27) auf ein zu bearbeitendes Werkstück (6) projiziert, **dadurch gekennzeichnet, daß** die Hilfseinrichtung eine Kamera (25), die den ersten Lichtfleck (26) und den zweiten Lichtfleck (27) in einem Bild (28) aufzeichnet, eine Auswertungseinrichtung (29), die basierend auf einem ersten Abstand des in dem Bild (28) aufgezeichneten ersten Lichtflecks (26) zu einem Referenzpunkt (43) in dem Bild (28) und einem zweiten Abstand (45) des in dem Bild aufgezeichneten zweiten Lichtflecks (27) zu dem Referenzpunkt (43) in dem Bild (28) eine Neigung (53) der Bohrmaschine (1) zu dem Werkstück (6) bestimmt, und eine Anzeigeneinrichtung (23) zum Anzeigen der bestimmten Neigung (53) aufweist.

2. Hilfseinrichtung nach Anspruch 1, **dadurch gekennzeichnet, dass** der Projektor (24) einen ersten Lichtstrahl (31) in eine erste Richtung zum Erzeugen des ersten Lichtflecks (26), einen zweiten Lichtstrahl (32) in eine zweite Richtung zum Erzeugen des zweiten Lichtflecks (27) und einen dritten Lichtstrahl (49) zum Erzeugen eines dritten Lichtflecks (50) ausgibt, wobei, auf eine optische Achse (22) der Kamera (25) bezogene, Azimutwinkel (33, 34) des ersten Lichtstrahls (31) und des zweiten Lichtstrahls (32) verschieden sind und, auf die optische Achse (22) bezogene, Polarwinkel (35, 36) des ersten Lichtstrahls (31) und des dritten Lichtstrahls (57) verschieden sind.

3. Hilfseinrichtung nach Anspruch 2, **dadurch gekennzeichnet, dass** der erste Lichtstrahl (31) unter einem Polarwinkel von größer 10 Grad bezogen auf die optische Achse (22) geneigt ist und der dritte Lichtstrahl (57) unter einem Polarwinkel von weniger als 5 Grad bezogen auf die optische Achse (22) geneigt ist.

4. Hilfseinrichtung nach einem der vorhergehenden Ansprüche, **dadurch gekennzeichnet, dass** die Kamera (25) und der Projektor (24) auf einer Plattform angeordnet sind, die gegenüber einer Arbeitsachse (3) der Bohrmaschine (1) verschwenkbar ist.

5. Hilfseinrichtung nach einem der vorhergehenden Ansprüche, **dadurch gekennzeichnet, dass** der Projektor (24) eine Laserlichtquelle (30) enthält.

6. Hilfseinrichtung nach Anspruch 5, **dadurch gekennzeichnet, dass** ein Strahlteiler (59) der Laserlichtquelle (30) zum Aufteilen eines Lichtstrahls in mehrere Lichtstrahlen nachgeschaltet ist.

7. Hilfseinrichtung nach einem der vorhergehenden Ansprüche, **dadurch gekennzeichnet, dass** der Projektor (24) einen selbstleuchtenden Bildschirm (60) und eine Abbildungsoptik (61) enthält.

8. Hilfseinrichtung nach einem der vorhergehenden Ansprüche, **dadurch gekennzeichnet, dass** die Anzeigeneinrichtung (23) einen Projektor (68) hat, der eine Anzeige auf das Werkstück (6) projiziert.

9. Hilfseinrichtung nach Anspruch 8, **dadurch gekennzeichnet, dass** der Projektor (68) in die gleiche Richtung wie die Kamera (25) orientiert ist.

10. Steuerungsverfahren zum Ausrichten einer Bohrmaschine (1) gegenüber einer Arbeitsfläche (5) mit dem Schritt:
Projizieren eines ersten Lichtflecks (26) und eines zweiten Lichtflecks (27) auf die Arbeitsfläche (5) mit einem Projektor (24), **gekennzeichnet durch** folgende Schritte:
Aufzeichnen des ersten Lichtflecks und des zweiten Lichtflecks in einem Bild (28) mittels einer Kamera (25),
Bestimmen eines ersten Abstands des in dem Bild (28) aufgezeichneten ersten Lichtflecks (26) zu einem Referenzpunkt (43) in dem Bild (28) und eines zweiten Abstands (45) des in dem Bild aufgezeichneten zweiten Lichtflecks (27) zu dem Referenzpunkt (43) in dem Bild (28),
Ermitteln einer Neigung (53) der Bohrmaschine (1) zu der Arbeitsfläche (5) basierend auf dem ersten Abstand (44) und dem zweiten Abstand (45) und
Anzeigen der bestimmten Neigung (53) mittels einer Anzeigeneinrichtung (23).

11. Steuerungsverfahren nach Anspruch 10, **dadurch gekennzeichnet, dass** ein erster Lichtstrahl (31) in eine erste Richtung zum Erzeugen des ersten Lichtflecks (26), ein zweiter Lichtstrahl (32) in eine zweite Richtung zum Erzeugen des zweiten Lichtflecks (27) und ein dritter Lichtstrahl (83) in eine dritte Richtung zum Erzeugen eines dritten Lichtflecks ausgegeben wird, wobei auf eine optische Achse (22) der Kamera (25) bezogene Azimutwinkel des ersten Lichtstrahls (31) und des zweiten Lichtstrahls (32) verschieden sind und auf die optische Achse (22) bezogene Polarwinkel des ersten Lichtstrahls (31) und des dritten Lichtstrahls (57) verschieden sind.

## Claims

1. Auxiliary device (20) able to be connected to a power drill (1), having a projector (24) which projects a first light spot (26) and a second light spot (27) onto a workpiece (6) to be worked on, **characterised in that** the auxiliary device has a camera (25) which causes the first light spot (26) and the second light spot (27) to be shown in a image (28), an analysing means (29) which, on the basis of a first distance from the first light spot (26) shown in the image (28) to a reference point (43) in the image (28) and on the basis of a second distance (45) from the second light spot (27) shown in the image (28) to the reference point (43) in the image (28), determines an inclination (53) of the power drill (1) to the workpiece (6), and a display means (23) for displaying the inclination (53) which is determined.

2. Auxiliary device according to claim 1, **characterised in that** the projector (24) emits a first light beam (31) in a first direction to produce the first light spot (26), a second light beam (32) in a second direction to produce the second light spot (27), and a third light beam (49) to produce a third light spot (50), azimuth angles (33, 34) of the first light beam (31) and the second light beam (32) to an optical axis (22) of the camera (25) being different and polar angles (35, 36) of the first light beam (31) and the third light beam (57) to the optical axis (22) being different.

3. Auxiliary device according to claim 2, **characterised in that** the first light beam (31) is inclined to the optical axis (22) at a polar angle of more than 10° and the third light beam (57) is inclined to the optical axis (22) at a polar angle of less than 5°.

4. Auxiliary device according to one of the preceding claims, **characterised in that** the camera (25) and the projector (24) are arranged on a platform which is pivotable relative to an operating axis (3) of the power drill (1).

5. Auxiliary device according to one of the preceding claims, **characterised in that** the projector (24) includes a laser light source (30).

6. Auxiliary device according to claim 5, **characterised in that** a beam splitter (59) is inserted downstream of the laser light source (30) to split one light beam into a plurality of light beams.

7. Auxiliary device according to one of the preceding claims, **characterised in that** the projector (24) includes a self-luminescent screen (60) and an image-forming optical system (61).

8. Auxiliary device according to one of the preceding claims, **characterised in that** the display means (23) has a projector (68) which projects an image onto the workpiece (6).

9. Auxiliary device according to claim 8, **characterised in that** the projector (68) is orientated in the same direction as the camera (25).

10. Method of control for aligning a power drill (1) relative to a working surface (5), having the step of:
projecting a first light spot (26) and a second light spot (27) onto the working surface (5) with a projector (24),
**characterised by** the following steps:
showing the first light spot and the second light spot in an image (28) by means of a camera (25),
determining a first distance from the first light spot (26) shown in the image (28) to a reference point (43) in the image (28) and a second distance (45) from the second light spot (27) shown in the image (28) to the reference point (43) in the image (28),
determining an inclination (53) of the power drill (1) to the working surface (5) on the basis of the first distance (44) and the second distance (45), and displaying the inclination (53) which is determined by means of a display means (23).

11. Method of control according to claim 10, **characterised in that** a first light beam (31) is emitted in a first direction to produce the first light spot (26), a second light beam (32) is emitted in a second direction to produce the second light spot (27), and a third light beam (83) is emitted in a third direction to produce a third light spot, azimuth angles of the first light beam (31) and the second light beam (32) to an optical axis (22) of the camera (25) being different and polar angles of the first light beam (31) and the third light beam (57) to the optical axis (22) being different.

## Revendications

1. Accessoire (20) pouvant être monté sur une perceuse (1), comportant un projecteur (24) projetant une première tache lumineuse (26) et une deuxième tache lumineuse (27) sur une pièce à usiner (6),
**caractérisé en ce que** l'accessoire (20) comporte une caméra (25) qui enregistre la première tache lumineuse (26) et la deuxième tache lumineuse (27) dans une image (28), un dispositif d'analyse (29) qui détermine, sur la base d'une première distance entre la première tache lumineuse (26) enregistrée dans l'image (28) et un point de référence (43) dans l'image (28) et d'une seconde distance (45) entre la deuxième tache lumineuse (27) enregistrée dans l'image et le point de référence (43) dans l'image (28), une inclinaison (53) de la perceuse (1) par rapport à la pièce (6), et un dispositif d'affichage (23) pour afficher l'inclinaison déterminée (53).

2. Accessoire selon la revendication 1, **caractérisé en ce que** le projecteur (24) émet un premier faisceau lumineux (31) dans une première direction pour générer la première tache lumineuse (26), un deuxième faisceau lumineux (32) dans une deuxième direction pour générer la deuxième tache lumineuse (27) et un troisième faisceau lumineux (49) pour générer une troisième tache lumineuse (50), dans lequel, des angles azimutaux (33, 34) du premier faisceau lumineux (31) et du deuxième faisceau lumineux (32) par rapport à un axe optique (22) de la caméra (25) sont différents et, des angles polaires (35, 36) du premier faisceau lumineux (31) et du troisième faisceau lumineux (57) par rapport à l'axe optique (22) sont différents.

3. Accessoire selon la revendication 2, **caractérisé en ce que** le premier faisceau lumineux (31) est incliné d'un angle polaire supérieur à 10 degrés par rapport à l'axe optique (22), et le troisième faisceau lumineux (57) est incliné d'un angle polaire inférieur à 5 degrés par rapport à l'axe optique (22).

4. Accessoire selon l'une des revendications précédentes, caractérisé ce que la caméra (25) et le projecteur (24) sont agencés sur une plate-forme qui peut pivoter par rapport à un axe de travail (3) de la perceuse (1).

5. Accessoire selon l'une des revendications précédentes, **caractérisé en ce que** le projecteur (24) contient une source de lumière laser (30).

6. Accessoire selon la revendication 5, **caractérisé en ce qu'**un séparateur de faisceau (59) de la source de lumière laser (30) est agencé en aval pour séparer un faisceau lumineux en plusieurs faisceaux lumineux.

7. Accessoire selon l'une des revendications précédentes, **caractérisé en ce que** le projecteur (24) contient un écran auto-lumineux (60) et un composant optique d'imagerie (61).

8. Accessoire selon l'une des revendications précédentes, **caractérisé en ce que** le dispositif d'affichage (23) a un projecteur (68) qui projette un affichage sur la pièce (6).

9. Accessoire selon la revendication 8, **caractérisé en ce que** le projecteur (68) est orienté dans la même direction que la caméra (25).

10. Procédé de commande pour aligner une perceuse (1) par rapport à une surface de travail (5), comportant l'étape consistant à :
projeter une première tache lumineuse (26) et une deuxième tache lumineuse (27) sur la surface de travail (5) avec un projecteur (24),
**caractérisé par** les étapes suivantes consistant à :
enregistrer la première tache lumineuse et la deuxième tache lumineuse dans une image (28) au moyen d'une caméra (25),
déterminer une première distance entre la première tache lumineuse (26) enregistrée dans l'image (28) et un point de référence (43) dans l'image (28) et une seconde distance (45) entre la deuxième tache lumineuse (27) enregistrée dans l'image et le point de référence (43) dans l'image (28),
déterminer une inclinaison (53) de la perceuse (1) par rapport à la surface de travail (5) sur la base de la première distance (44) et de la seconde distance (45), et
afficher l'inclinaison déterminée (53) au moyen d'un dispositif d'affichage (23).

11. Procédé de commande selon la revendication 10, **caractérisé en ce qu'**un premier faisceau lumineux (31) est émis dans une première direction pour générer la première tache lumineuse (26), un deuxième faisceau lumineux (32) est émis dans une deuxième direction pour générer la deuxième tache lumineuse (27) et un troisième faisceau lumineux (83) est émis dans une troisième direction pour générer une troisième tache lumineuse, dans lequel des angles azimutaux du premier faisceau lumineux (31) et du deuxième faisceau lumineux (32) par rapport à un axe optique (22) de la caméra (25) sont différents, et des angles polaires du premier faisceau lumineux (31) et du troisième faisceau lumineux (57) par rapport à l'axe optique (22) sont différents.
